# EUROPÄISCHE PATENTANMELDUNG

(11) **EP 3 751 248 A1**
(43) Veröffentlichungstag der Anmeldung: **16.12.2020**
(21) Anmeldenummer: 19180254.5
(22) Anmeldetag: 14.06.2019
(51) Int. Cl.: G01L 1/24, G01K 5/48, B61L 1/02, B61L 23/04, G01M 5/00

(54) **SCHIENENÜBERWACHUNGSELEMENT, VERFAHREN ZUR MONTAGE EINES SCHIENENÜBERWACHUNGSELEMENTS UND VERFAHREN ZUR HERSTELLUNG EINES SCHIENENÜBERWACHUNGSELEMENTS**

(71) Anmelder: Thales Management & Services Deutschland GmbH, 71254 Ditzingen (DE)
(72) Erfinder: SCHICKER, Kai, 08539 Rosenbach (DE); SOLLEDER, Stefan, 70839 Gerlingen (DE)
(74) Vertreter: Kohler Schmid Möbus Patentanwälte

(57) **Zusammenfassung**

Die Erfindung betrifft ein Schienenüberwachungselement (SUE) mit einem Träger (T), auf dem ein Dehnungssensor, insbesondere mit einer optischen Faser (F) mit einem Fiber-Bragg-Gitter (FBG), befestigt ist. Erfindungsgemäß weist der Träger (T) eine Klebstoffschicht (K) zur adhäsiven Befestigung an einer Schiene (S) mit einem thermisch aktivierbaren oder thermisch aushärtbaren Klebstoff auf, wobei die Klebstoffschicht (K) ein Heizelement (HE) mit Kontakten (KO) zur Beaufschlagung mit elektrischer Energie aufweist. Das erfindungsgemäße Schienenüberwachungselement kann einfacher und energiesparender montiert werden.

## Beschreibung

### Hintergrund der Erfindung

Die Erfindung betrifft ein Schienenüberwachungselement mit einem Träger, auf dem ein Dehnungssensor, insbesondere mit einer optischen Faser mit einem Fiber-Bragg-Gitter (FBG), befestigt ist, wobei der Träger eine Klebstoffschicht zur adhäsiven Befestigung an einer Schiene mit einem thermisch aktivierbaren oder thermisch aushärtbaren Klebstoff aufweist. Die Erfindung betrifft weiter ein Verfahren zur Montage eines Schienenüberwachungselements sowie ein Verfahren zur Herstellung eines Schienenüberwachungselements.

Ein Schienenüberwachungselement mit FBG-Sensoren ist beispielsweise aus DE 10 2017 216 811 A1 bekannt.

Um den Eisenbahnverkehr sicherer zu machen, werden Schienenüberwachungselemente, z. B. Sensorelemente für Achszähler, eingesetzt. Mit Achszählern kann insbesondere überprüft werden, ob der Ort des Achszählers von einem Zug vollständig passiert wurde, um beispielsweise zu ermitteln, ob zugehörige Gleisabschnitte frei oder belegt sind. Derartige Schienenüberwachungselemente umfassen Sensorelemente, die in der Regel an der Schiene befestigt werden müssen.

In Messsystemen gewinnen faseroptische Sensoren zunehmend an Bedeutung. Hierbei werden ein oder mehrere in Lichtwellenleiter eingebettete Sensoren, wie beispielsweise Faser-Bragg-Gitter, herangezogen, um eine durch eine mechanische Größe hervorgerufene Dehnung oder Stauchung der optischen Faser zu erfassen, und um damit die Kräfte, Drehmomente, Beschleunigungen, Belastungen, Druckzustände etc. detektieren zu können.

In EP 3 069 952 A1 und WO 2016/150670 A1 wird die Verwendung von faseroptischen Sensoren mit Faser-Bragg-Gittern (FBG) als Dehnungssensorelement an Eisenbahnschienen beschrieben, beispielsweise als Schienenkontakt eines Achszählers.

In der DE 10 2017 216 811 A1 wird ein Verfahren beschrieben, bei dem ein Schienenüberwachungselement adhäsiv an einer Schiene befestigt wird. Es wird die Befestigung mittels eines hitzeaktivierten Klebstoffs vorgeschlagen. Die Aktivierung erfolgt durch Erhitzung der Schiene mittels eines induktiven Heizelements. Hierzu wird jedoch viel Energie benötigt, da ein großes Volumen (Schiene) erhitzt werden muss, um einen ausreichenden Wärmeeintrag in die Klebeschicht des Schienenüberwachungselements zu gewährleisten.

In der WO 2017/162829 A1 wird ein Verfahren zum Verbinden zweier Fügeelemente beschrieben. Die Fügeelemente werden mittels eines thermischen aktivierbaren Klebstoffes und eines darin angeordneten flächigen Heizelements verbunden. Der Klebstoff wird durch das Heizelement erwärmt, in dem das Heizelement mit elektrischer Energie beaufschlagt wird.

Es ist Aufgabe der Erfindung ein Schienenüberwachungselement und ein Verfahren zur Herstellung eines Schienenüberwachungselements vorzuschlagen, bei dem die Montage einfacher und energiesparender durchgeführt werden kann. Es ist weiter Aufgabe der Erfindung, ein vereinfachtes Verfahren zur Montage eines Schienenüberwachungselements vorzuschlagen.

Diese Aufgabe wird gelöst durch ein Schienenüberwachungselement nach Anspruch 1, ein Verfahren zur Montage eines Schienenüberwachungselements nach Anspruch 11 sowie ein Verfahren zur Herstellung eines Schienenüberwachungselements nach Anspruch 14. Die abhängigen Ansprüche geben vorteilhafte Ausgestaltungen der Erfindung an.

Das erfindungsgemäße Schienenüberwachungselement weist einen Träger auf, auf dem ein Dehnungssensor, insbesondere mit einer optischen Faser mit einem Fiber-Bragg-Gitter befestigt ist. Der Träger ist ein flächiges Element, das zur Aufgabe hat, den Dehnungssensor aufzunehmen und zu stabilisieren. Der Träger weist weiter eine Klebstoffschicht zur adhäsiven Befestigung an einer Schiene auf. Der Klebstoff ist thermisch aktivierbar oder thermisch aushärtbar. Erfindungsgemäß weist die Klebstoffschicht ein Heizelement mit Kontakten zur Beaufschlagung mit elektrischer Energie auf.

Thermisch aktivierbarer Klebstoff ist beispielsweise eine hitzeaktivierbare Folie (HAF). Thermisch aktivierbarer Klebstoff ist fertiger Klebstoff, dessen Aushärtung blockiert, bzw. extrem verlangsamt ist. Die Blockade wird bei Beaufschlagung mit Wärme gelöst und der Klebstoff beginnt schnell, bzw. beschleunigt auszuhärten.

Thermisch aushärtbarer Klebstoff ist Klebstoff, dessen Aushärtevorgang mit Wärme beschleunigt wird. Thermisch aushärtbarer Klebstoff wird deshalb zum Beispiel auch warmhärtender Klebstoff genannt. Das bedeutet, dass thermisch aushärtbarer Klebstoff bei Beaufschlagung mit Wärme wesentlich schneller aushärtet, als bei geringeren Temperaturen. Aushärtung bedeutet die Vernetzung des Klebstoffs, wobei der Vernetzungsvorgang unter Wärme beschleunigt wird.

Bevorzugt befindet sich die Klebstoffschicht auf der dem Dehnungssensor gegenüberliegenden Seite des Trägers. Dies ermöglicht die Befestigung des Trägers auf der Schiene, beispielsweise auf dem Schienensteg der Schiene und ermöglicht es, dem Dehnungssensor von der Klebstoffschicht unbeeinträchtigt die gewünschten Sensordaten zu liefern.

Die Erfindung erlaubt damit eine energieeffiziente Methode der Erwärmung des Klebstoffes. Die Wärmequelle wird nämlich genau dort platziert, wo sie benötigt wird, das heißt in der Klebstoffschicht. Hierdurch wird der Energiebedarf zum Erwärmen des Klebstoffs verringert. Es muss beispielsweise nicht die gesamte Schiene oder der gesamte Schienensteg erhitzt werden.

In bevorzugten Ausführungsformen der Erfindung ist das Heizelement drahtförmig, gitterförmig oder beispielsweise flächig ausgeführt. Eine flächige Ausführung kann z. B. eine Folie, ein Netz oder ein Gewebe sein. Entsprechende Drahtgeflechte können beispielsweise gelasert werden. Der Vorteil dieser Ausführungsformen ist, dass das Heizelement einen großen Flächenkontakt mit dem Klebstoff der Klebstoffschicht aufweist und somit die Wärme gut in die Klebstofffläche der Klebstoffschicht übertragen werden kann. Dies ermöglicht eine weitere Energieeinsparung.

In einer bevorzugten Ausführungsform der Erfindung ist das Heizelement in die Klebstoffschicht eingebettet. Eine solche Einbettung kann beispielsweise im Sandwichverfahren hergestellt werden, in dem eine Klebstoffschicht auf den Träger aufgebracht wird, das Heizelement auf diese Schicht aufgebracht wird und daraufhin eine zweite Klebstoffschicht auf das Heizelement aufgebracht wird. Diese Klebstoff-Heizelemente-Klebstoff- Sandwich-Schicht kann beispielsweise bei der Herstellung des Schienenüberwachungselements wie oben beschrieben aufgebracht werden. Alternativ ist es ebenso möglich, diese Klebstoff-Heizelemente-Klebstoff-Sandwich-Schicht bei der Montage, d. h. kurz vor Aufbringen auf die Schiene, wie oben beschrieben auf den Träger aufzubringen. Dies ermöglicht eine große Flexibilität im Herstellungs-und Montagevorgang des Schienenüberwachungselements.

In einer Ausführungsform der Erfindung ist es ebenfalls möglich, dass das Heizelement auf der Klebstoffschicht aufgebracht ist. Eine Möglichkeit besteht hierbei, dass das Heizelement zwischen Klebstoffschicht und Träger angeordnet ist. Alternativ ist die Klebstoffschicht zwischen Heizelement und Träger angebracht. Beide Ausführungsformen sind möglich.

In einer bevorzugten Ausführungsform der Erfindung umfasst das Heizelement eine wärmeleitende elektrisch isolierende Ummantelung. Diese Ummantelung ermöglicht einerseits eine gute Wärmeübertragung zwischen Heizelement und Klebstoffschicht und andererseits eine gute elektrische Isolierung. Dazu kann beispielsweise ein emaillierter Draht als Heizelement verwendet werden. Die elektrische Isolierung ermöglicht hierbei, dass der elektrische Strom, mit dem das Heizelement beaufschlagt wird, nicht mit anderen Teilen des Schienenüberwachungselements in elektrische Verbindung kommt. Durch die isolierende Ummantelung wird z.B. vermieden, dass eine elektrische Verbindung zwischen Heizelement und z. B. Schiene und/oder z. B. dem Träger des Schienenüberwachungselements hergestellt wird. Durch die isolierende Ummantelung wird die Herstellung und auch die Montage des Schienenüberwachungselements weiter vereinfacht. Da das Heizelement elektrisch isoliert ist, ist es kein Problem, wenn die isolierende Ummantelung z. B. mit der Schiene in Kontakt steht. Die isolierende Ummantelung schützt vor einem elektrischen Kontakt. In gleicher Weise ist es möglich, dass das Heizelement mit seiner isolierenden Ummantelung mit dem Träger in Kontakt steht. Durch die elektrische isolierende Ummantelung wird verhindert, dass elektrischer Strom auf den Träger und z. B. auf das Sensorelement gelangt. Gerade für den Einsatz im Bahnbereich und an der Schiene ist eine solche einfache Montierbarkeit und Robustheit sehr vorteilhaft. Gegenüber unisolierten Heizelementen besteht bei dieser Ausführungsform überdies der Vorteil, dass keine Abstandselemente in der Klebeschicht vorgesehen werden müssen, um zu verhindern, dass das Heizelement in Kontakt mit der Schiene tritt. Diese Abstandselemente können deshalb eingespart werden, was zu einer weiteren Vereinfachung der Montage bzw. der Herstellung des Schienenüberwachungselements führt. Die isolierende Ummantelung um das Heizelement ist ebenfalls von Vorteil, weil das Heizelement hierdurch so gestaltet sein kann, dass sich Abschnitte des Heizelements kreuzen oder sehr eng beieinander angeordnet werden können, ohne dass hierdurch ein Kurzschluss hergestellt wird. Dies erleichtert die Montage weiter. Dies ermöglicht außerdem eine dichtere Anordnung des Heizelements, z. B. den Heizdrähten, in der Klebstoffschicht.

In einer bevorzugten Ausführungsform der Erfindung handelte es sich bei der Klebstoffschicht um eine hitzeaktivierbare Folie (HAF). Eine hitzeaktivierbare Folie ist eine Folie aus Klebstoff, der durch Hitze aktiviert wird, d. h. durch Hitze beginnt die Verkettung im Klebstoff und damit die Klebwirkung. Beispielsweise können zwei hitzeaktivierbare Folien einen Heizdraht sandwichartig umgeben. Durch Beaufschlagung des Heizdrahtes mit elektrischer Energie können diese hitzeaktivierbaren Folien aktiviert werden.

Durch das Einbetten eines Temperatursensors in die Klebstoffschicht kann der Prozess des Erhitzens der Klebstoffschicht noch feiner gesteuert werden, indem die Sensordaten ausgelesen werden und auf Einhaltung eines bestimmten Temperaturbereiches geachtet wird. Wenn als Dehnungssensor ein Fiber-Bragg-Gitter verwendet wird, kann durch Verkleben des Fiber-Bragg-Gitters die Temperaturüberwachung bereits präzise erfolgen, so dass für eine solche Ausführungsform ein zusätzlicher Temperatursensor entfallen kann.

Bevorzugt hat die Klebstoffschicht eine Dicke von zwischen 0,5 und 1,5 mm, z. B. 0,8 mm. Diese Dicke ist von Vorteil, um eine eventuell vorliegende Krümmung oder Unebenheiten der Schiene ausgleichen zu können und trotzdem eine genügende Klebewirkung zu erzielen. Die Viskosität des Klebstoffes sollte pastös bzw. "standfest" sein (20.000 bis 100.000mPas). Dadurch wird sichergestellt, dass trotz der relativ groß gewählten Dicke der Klebstoffschicht diese während der Montage nicht aus dem Zwischenraum zwischen Träger und Schiene austritt.

Besonders bei der Verwendung von hitzeaktivierbaren Klebstoffen wird zu deren Aktivierung neben der Erwärmung der Klebeschicht bevorzugt auch ein Anpressdruck auf die Klebeschicht ausgeübt, beispielsweise zwischen 0,3 bar und 0,7 bar, bevorzugt ca. 0,5 bar. Das Heizelement ist deshalb bevorzugt so ausgebildet, dass es bezüglich solcher Drücke druckunempfindlich ist. Beim Aufbringen auf den Schienensteg befindet sich die Klebefläche in der Vertikalen im Hinblick auf die Erdanziehung. Hierdurch ist ein Anpressdruck auf die Klebefläche nötig, da das zu klebende Schienenüberwachungselement sonst verrutschen könnte. Hierdurch ergibt sich ein doppelter Nutzen aus dem Anpressdruck: Er verhindert ein Verrutschen bei der vertikalen Klebung und ermöglicht zugleich die Aktivierung des hitzeaktivierbaren Klebstoffes.

Die Erfindung betrifft auch eine Montageanordnung zum Montieren des Schienenüberwachungselements. Die Montageanordnung umfasst ein Schienenüberwachungselement, wie zuvor beschrieben, und eine mobile Energieversorgung. Das Heizelement der Klebstoffschicht ist über die Kontakte mit der mobilen Energieversorgung elektrisch verbunden. Die mobile Energieversorgung führt der Klebstoffschicht elektrische Energie zu und erwärmt diese somit.

Eine besonders bevorzugte Ausführungsform umfasst einen Schalter zur elektrischen Verbindung der Energieversorgung mit den Kontakten des Heizelements und eine Kontrolleinheit, die den Schaltzustand des Schalters steuert. Diese Steuerung erfolgt in Abhängigkeit einer über einen Temperatursensor erfassten Temperatur, wobei der Temperatursensor vorzugsweise in der Klebstoffschicht angeordnet ist, wie oben beschrieben. Auf diese Weise kann die Temperatur der Klebstoffschicht besonders präzise und betriebssicher eingestellt werden.

Bei einer Montage des erfindungsgemäßen Schienenüberwachungselementes an einer Montagestelle auf einer Schiene werden die folgenden Schritte durchgeführt: Das Schienenüberwachungselement wird an der Montagestelle positioniert, wobei die Klebstoffschicht des Trägers in Kontakt mit der Schiene kommt. Danach wird die Klebstoffschicht durch Beaufschlagung des Heizelements mit elektrischer Energie erwärmt. Bevorzugt wird zur Beaufschlagung des Heizelements mit elektrischer Energie eine Batterie verwendet. Die Batterie kann beispielsweise eine herkömmliche 12-V-Batterie sein. Zur Beaufschlagung des Heizelements mit elektrischer Energie kann ebenso eine mobile und/oder tragbare Spannungsversorgung dienen, insbesondere im Bereich der Schutzkleinspannung.

In einer bevorzugten Ausführungsform der Erfindung wird die elektrische Energie in Abhängigkeit von der Temperatur des Klebstoffes geregelt. Bevorzugt wird die Temperatur des Klebstoffes durch einen in der Klebstoffschicht eingebetteten Temperatursensor ermittelt. Hierdurch kann das Aushärten des Klebstoffes weiter günstig beeinflusst werden, da die optimale Temperatur möglichst gut eingehalten werden kann.

In einer Ausführungsform der Erfindung wird vor dem Anordnen der Klebstoffschicht an der Schiene die Schiene im Bereich der Montagestelle mit Hitze beaufschlagt. Dieses Erhitzen der Schiene erfolgte zusätzlich zum Erhitzen der Klebstoffschicht durch das Heizelement. Durch das Erhitzen der Schiene kann die Montagestelle, z. B. bei sehr kalter Witterung auf das Kleben vorbereitet werden. Dies ist insbesondere von Vorteil, wenn die Wärme, die durch das Heizelement erzeugt wird, wegen der zu kalten Witterung nicht ausreichend wäre, um den Klebstoff auszuhärten.

Bei einem Verfahren zur Herstellung eines Schienenüberwachungselements wird in einem ersten Schritt ein Dehnungssensor, insbesondere mit einer optischen Faser mit einem Fiber-Bragg-Gitter auf einer ersten Seite eines flächigen Trägers befestigt. Dann wird eine Klebstoffschicht auf der dem Dehnungssensor gegenüberliegenden Seite des Trägers angebracht. In der Klebstoffschicht oder auf der Klebstoffschicht ist dabei ein Heizelement mit Kontakten zur Beaufschlagung mit elektrischer Energie angeordnet. Die Anordnung des Heizelements auf der Klebstoffschicht hat den Vorteil, dass diese Anordnung einfach hergestellt werden kann. Bei dieser Anordnung ist das Heizelement vorzugsweise mit einer isolierenden Ummantelung versehen, um einen direkten Kontakt von Heizelement und Schiene zu vermeiden. Ist das Heizelement in Sandwichbauart zwischen zwei Lagen der Klebstoffschicht angeordnet, kann auf eine isolierende Ummantelung des Heizelements verzichtet werden, wenn die Klebstoffschicht dick genug gewählt wird. Das Vorsehen einer isolierenden Ummantelung des Heizelements ist jedoch auch hier vorteilhaft, da hierdurch eine größere Flexibilität in der Druckaufbringung bei der Montage ermöglicht wird. Das Heizelement kann in Sandwichart insbesondere zwischen zwei hitzeaktivierbaren Klebstofffolien angeordnet und fixiert sein. Die Fixierung ist dabei denkbar, z. B. durch Haftreibung oder Vorlaminierung der hitzeaktivierbaren Folien.

Weitere Vorteile der Erfindung ergeben sich aus der Beschreibung und der Zeichnung. Ebenso können die vorstehend genannten und noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Es zeigen:
- **Fig. 1**: einen Schnitt durch eine Schiene mit einem aufgebrachten Schienenüberwachungselement mit einem Träger, einer Klebeschicht und Kontakten;
- **Fig. 2**: einen Schnitt durch ein Schienenüberwachungselement mit einem Träger mit einer Klebeschicht, bestehend aus zwei Lagen und dazwischen angeordnetem Heizelement;
- **Fig. 3**: einen Schnitt durch ein Schienenüberwachungselement mit einem Träger mit einer Klebeschicht und darauf angeordnetem Heizelement mit isolierender Ummantelung;
- **Fig. 4**: eine schematische Darstellung einer Klebeschicht mit gitterförmigen Heizelement und Spannungsversorgung;
- **Fig. 5**: eine schematische Darstellung einer Klebeschicht mit Heizelement und einer Kontrolleinheit;
- **Fig. 6**: eine perspektivische Ansicht einer Schiene mit darauf angebrachtem Schienenüberwachungselement.

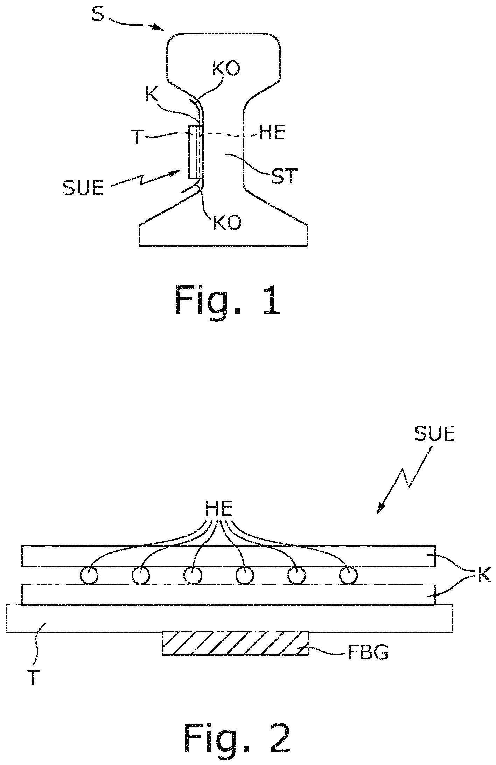

**Fig. 1** zeigt einen Schnitt durch eine Schiene **S** mit Schienensteg **ST**. Auf dem Schienensteg aufgebracht ist ein Schienenüberwachungselement **SUE**, umfassend einen Träger **T** und eine Klebschicht **K**. Erfindungsgemäß ist in der Klebschicht K ein Heizelement **HE** angeordnet. An das Heizelement HE sind Kontakte **KO** angeschlossen. Die Kontakte KO sind elektrische Kontakte und dienen der Beaufschlagung des Heizelements HE mit elektrischer Energie.

**Fig. 2** zeigt eine beispielhafte Ausführungsform des erfindungsgemäßen Schienenüberwachungselements, bei dem die auf dem Träger T aufgebrachte Klebeschicht K aus zwei Lagen besteht. Zwischen den beiden Lagen der Klebeschicht K ist das Heizelement HE angeordnet. In Fig. 2 dargestellt ist ein Schnitt durch diese Anordnung. Im vorliegenden Beispiel besteht das Heizelement HE aus Drähten, die zwischen den beiden Lagen der Klebeschicht K verlaufen. Durch Beaufschlagung des Heizelements HE mit elektrischer Energie verbinden sich die beiden Lagen der Klebeschicht K und schließen das Heizelement HE ein.

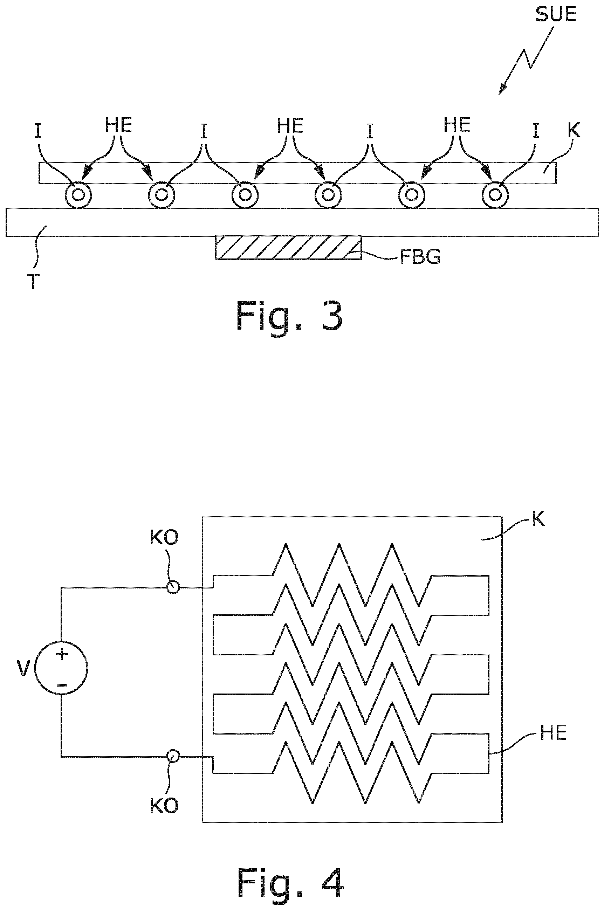

**Fig. 3** zeigt eine andere beispielhafte Ausführungsform des erfindungsgemäßen Schienenüberwachungselements, bei dem die auf dem Träger T aufgebrachte Klebeschicht K einlagig ist. Zwischen der Klebeschicht K und dem Träger T ist das Heizelement HE angeordnet. Im vorliegenden Beispiel besteht das Heizelement HE aus Drähten, die von einem isolierenden Mantel I umgeben sind. In Fig. 3 dargestellt ist ein Schnitt durch diese Anordnung. Im in Fig. 3 dargestellten Ausführungsbeispiel ist es möglich, das Heizelement HE zwischen der Klebeschicht K und dem Träger T anzuordnen, im Gegensatz zu der in Fig. 2 gezeigten Ausführungsform, bei der das Heizelement HE komplett in der Klebstoffschicht K eingebettet ist. Eine elektrische Isolierung gegenüber dem Träger T ist hierbei durch eine isolierende Ummantelung I gewährleistet. Durch Beaufschlagung des Heizelements HE mit elektrischer Energie verbinden sich die Klebeschicht K mit dem Träger T und schließt das Heizelement HE ein.

**Fig. 4** zeigt eine schematische Ansicht einer Klebeschicht K mit einem Heizelement HE. Dabei kann es sich um eine Aufsicht (bei Anordnung des Heizelements auf der Klebeschicht) oder eine Schnittdarstellung (bei Anordnung des Heizelements in der Klebeschicht bzw. zwischen zwei Lagen der Klebeschicht) parallel zur flächigen Ausdehnung der Klebeschicht handeln. Im dargestellten Beispiel von Fig. 4 bildet das Heizelement eine Art Gitter, gebildet durch einen Draht zickzackförmig und mäanderförmig über eine Fläche verläuft. Das Heizelement HE kann zwischen zwei Lagen der Klebeschicht K verlaufen. Das Heizelement HE weist Kontakte KO auf, über die z. B. eine Gleichspannungsquelle **V** beispielsweise in Form einer Batterie angeschlossen ist. Über die Spannungsquelle, z. B. die Gleichspannungsquelle V kann das Heizelement HE mit elektrischer Energie beaufschlagt werden. Statt der Gleichspannungsquelle V ist auch der Einsatz einer Wechselspannungsquelle möglich.

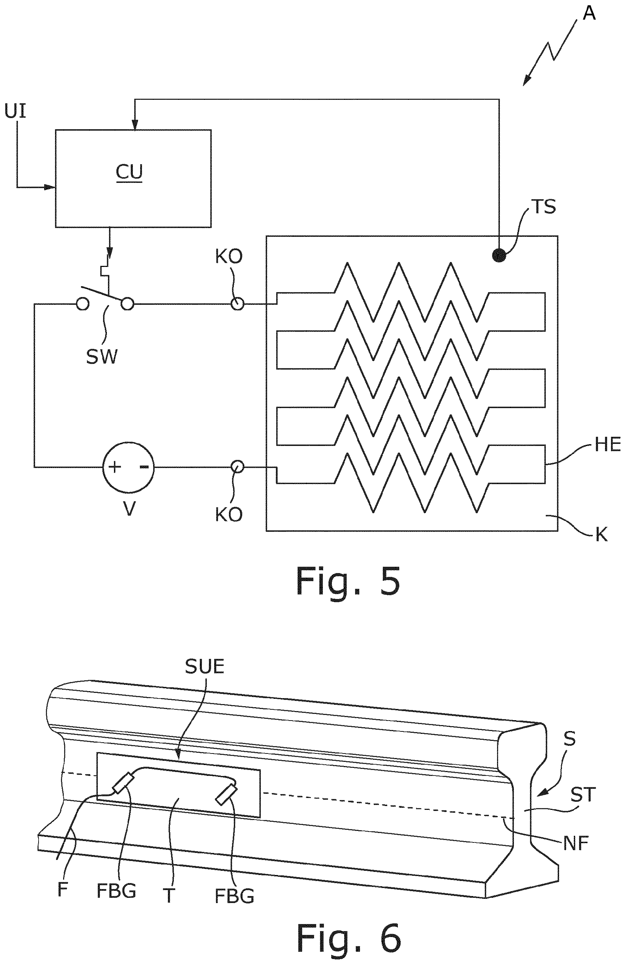

**Fig. 5** zeigt eine Anordnung **A** zur Montage des Schienenüberwachungselements. In der Klebeschicht K mit dem Heizelement HE ist zusätzlich ein Temperatursensor **TS** angeordnet. Wie in Fig. 4 ist auch hier das Heizelement HE über die Kontaktelemente KO mit der Gleichspannungsquelle V verbunden. In einer Kontrolleinheit **CU** wird die Verbindung der Gleichspannungsquelle V mit den Kontaktelementen KO gesteuert. Diese Steuerung erfolgt über einen Schalter **SW**, der von der Kontrolleinheit **CU** geöffnet und geschlossen werden kann. Der Temperatursensor TS erfasst die Temperatur der Klebeschicht K. Die erfassten Daten werden von der Kontrolleinheit CU aufgenommen. In Abhängigkeit von der erfassten Temperatur der Klebeschicht K wird über den Schalter SW die Beaufschlagung mit elektrischer Energie über die Kontaktelemente KO gesteuert. Über eine Benutzerschnittstelle **UI** ist eine Steuerung der Kontrolleinheit CU durch einen Nutzer möglich.

**Fig.6** zeigt eine perspektivische Darstellung der Schiene S mit einer neutralen Faser NF. An der Schiene S ist ein Schienenüberwachungselement SUE in Form eines faseroptischen Sensorelements montiert. Das Schienenüberwachungselement SUE umfasst einen Träger T auf dem zwei Faser-Bragg-Gitter FBG vormontiert sind. Eine optische Faser F verbindet die beiden Faser-Bragg-Gitter FBG auf dem Schienenüberwachungselement SUE. Das Schienenüberwachungselement SUE wird vorzugsweise im Bereich der neutralen Faser NF montiert, insbesondere so, dass jedes Faser-Bragg-Gitter FBG mit einem Ende unterhalb der neutralen Faser NF und mit dem anderen Ende oberhalb der neutralen Faser NF angeordnet ist. Der Träger T des Schienenüberwachungselements SUE wird vorzugsweise auf dem Schienensteg ST der Schiene S montiert. Nach der Montage wird die Gleichspannungsquelle entfernt und kann zur Montage weiterer Schienenüberwachungselemente verwendet werden.

Mit dem erfindungsgemäßen Verfahren wird eine einfach durchzuführende und sichere flächige Verbindung zwischen dem Träger T des Schienenüberwachungselements SUE und der Schiene S ermöglicht. Insbesondere wird die Montage weiter verbilligt und vereinfacht, was insbesondere den Einsatz im Feld verbessert. Das Schienenüberwachungselement SUE kann schneller und sicherer montiert werden.

### Bezuaszeichenliste

- A: Montageanordnung
- CU: Kontrolleinheit
- F: optische Faser
- FBG: Fiber-Bragg-Gitter
- HE: Heizelement
- I: elektrisch isolierende Ummantelung
- K: Klebstoffschicht
- KO: elektrische Kontakte
- NF: neutrale Faser
- S: Schiene
- ST: Schienensteg
- SUE: Schienenüberwachungselement
- SW: Schalter
- T: Träger
- TS: Temperatursensor
- UI: Benutzerschnittstelle
- V: Gleichspannungsquelle

### Literaturliste

DE 10 2017 216 811 A1
EP 3 069 952 A1
WO 2016/150670 A1
WO 2017/162829 A1

## Patentansprüche

1. Schienenüberwachungselement (SUE) mit einem Träger (T), auf dem ein Dehnungssensor, insbesondere mit einer optischen Faser (F) mit einem Fiber-Bragg-Gitter (FBG), befestigt ist, wobei der Träger (T) eine Klebstoffschicht (K) zur adhäsiven Befestigung an einer Schiene (S) mit einem thermisch aktivierbaren oder thermisch aushärtbaren Klebstoff aufweist,
**dadurch gekennzeichnet, dass**
die Klebstoffschicht (K) ein Heizelement (HE) mit Kontakten (KO) zur Beaufschlagung mit elektrischer Energie aufweist.

2. Schienenüberwachungselement nach Anspruch 1, **dadurch gekennzeichnet, dass** das Heizelement (HE) drahtförmig ist.

3. Schienenüberwachungselement nach Anspruch 2, **dadurch gekennzeichnet, dass** das Heizelement (HE) gitterförmig in der Klebstoffschicht angeordnet ist.

4. Schienenüberwachungselement nach Anspruch 1, **dadurch gekennzeichnet, dass** das Heizelement (HE) flächig, insbesondere eine Folie, ein Netz oder ein Gewebe ist.

5. Schienenüberwachungselement nach einem der Ansprüche 1 bis 4, **dadurch gekennzeichnet, dass** das Heizelement (HE) in die Klebstoffschicht (K) eingebettet ist.

6. Schienenüberwachungselement nach einem der Ansprüche 1 bis 4, **dadurch gekennzeichnet, dass** das Heizelement (HE) auf der Klebstoffschicht aufgebracht ist.

7. Schienenüberwachungselement nach einem der vorhergehenden Ansprüche, **dadurch gekennzeichnet, dass** das Heizelement (HE) eine wärmeleitende, elektrisch isolierende Ummantelung (I) aufweist.

8. Schienenüberwachungselement nach einem der vorhergehenden Ansprüche, **dadurch gekennzeichnet, dass** es sich bei der Klebstoffschicht (K) um eine hitzeaktivierbare Folie handelt.

9. Schienenüberwachungselement nach einem der vorhergehenden Ansprüche, **dadurch gekennzeichnet, dass** in der Klebstoffschicht ein Temperatursensor (TS) eingebettet ist.

10. Schienenüberwachungselement nach einem der vorhergehenden Ansprüche, **dadurch gekennzeichnet, dass** die Klebstoffschicht (K) mindestens eine Dicke von 0,5 mm, bevorzugt von mindestens 0,8 mm, aufweist.

11. Montageanordnung (A) mit einem Schienenüberwachungselement nach einem der vorhergehenden Ansprüche und einer mobilen Energieversorgung (V), wobei das Heizelement (HE) Kontakte (KO) aufweist, die mit der mobilen Energieversorgung (V) elektrisch verbunden sind.

12. Montageanordnung nach Anspruch 11, **gekennzeichnet durch** eine Kontrolleinheit (CU), welche den Schaltzustand eines Schalters (SW) zur elektrische Verbindung der Energieversorgung (V) mit den Kontakten (KO) des Heizelements in Abhängigkeit einer über einen Temperatursensor (TS) erfassten Temperatur steuert.

13. Verfahren zur Montage eines Schienenüberwachungselements (SUE) nach einem der vorhergehenden Ansprüche an einer Montagestelle einer Schiene (S), umfassend die Schritte:
• Positionierung des Schienenüberwachungselements (SUE) an der Montagestelle, wobei die Klebstoffschicht (K) des Trägers (T) in Kontakt mit der Schiene (S) kommt,
• Erwärmen der Klebstoffschicht (K) durch Beaufschlagung des Heizelements (HE) mit elektrischer Energie.

14. Verfahren nach Anspruch 13, **dadurch gekennzeichnet, dass** die elektrische Energie in Abhängigkeit von der Temperatur des Klebstoffes geregelt wird.

15. Verfahren nach Anspruch 13 oder 14, **dadurch gekennzeichnet, dass** vor dem Anordnen der Klebstoffschicht (K) an der Schiene (S) die Schiene (S) im Bereich der Montagestelle mit Hitze beaufschlagt wird.

16. Verfahren zur Herstellung eines Schienenüberwachungselements (SUE) umfassend die Schritte:
• Befestigen eines Dehnungssensors, insbesondere mit einer optischen Faser (F) mit einem Fiber-Bragg-Gitter (FBG), auf einer ersten Seite eines flächigen Trägers (T),
• Anbringen einer Klebstoffschicht (K) auf der dem Dehnungssensor gegenüberliegenden Seite des Trägers,
**dadurch gekennzeichnet, dass**
in oder auf der Klebstoffschicht ein Heizelement (HE) mit Kontakten (KO) zur Beaufschlagung mit elektrischer Energie angeordnet wird.

17. Verfahren nach Anspruch 16, **dadurch gekennzeichnet, dass** das Heizelement zwischen zwei hitzeaktivierbaren Folien angeordnet und fixiert wird.

18. Schienenüberwachungselement hergestellt durch ein Verfahren nach einem der Ansprüche 16 oder 17.
